# EUROPEAN PATENT APPLICATION

(11) **EP 4 678 693 A1**
(43) Date of publication of application: **14.01.2026**
(21) Application number: 25187447.5
(22) Date of filing: 04.07.2025
(51) Int. Cl.: C08K 3/36, C08K 5/3467

(54) **RUBBER COMPOSITIONS AND ARTICLES THEREOF**

(30) Priority: 11.07.2024 US 202418770186
(71) Applicant: The Goodyear Tire & Rubber Company, Akron, OH 44316 (US)
(72) Inventor: ENGELDINGER, Eric, L-8508 Rédange/Attert (LU)
(74) Representative: Kutsch, Bernd

(57) **Abstract**

An uncured composition is disclosed comprising at least one partially saturated elastomer comprising repeat units, wherein less than or equal to 15% of all repeat units of the partially saturated elastomer comprise a double bond, and 2,2,4-trimethyl-1,2-dihydroquinoline or an oligomer thereof. The uncured rubber composition may be used as a vulcanized rubber composition in an article such as a tire or a tire component.

## Description

### BACKGROUND

Rubber articles such as vehicle tires are degraded by atmospheric oxygen and ozone, leading to discoloration as well as structural defects such as cracking while in a strained state such as during road use. Ozone can also react with some polymers in tires in a way that generates free radicals. Damage caused by ozone and free radicals can lead to degraded appearance as well as causing performance and safety issues. Thus, antioxidants and antiozonants have been introduced into tire sidewalls to protect against the effects of atmospheric oxygen and ozone.

6PPD is a compound having antiozonant properties that is frequently incorporated into rubber articles including vehicle tires.

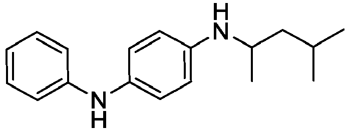

This compound migrates over time to the surface of the vehicle tires, essentially forming a film that scavenges ozone before the ozone can degrade the rubber. 6PPD essentially replenishes itself at the tire surface through continuous blooming. Due to its high reactivity, however, 6PPD may transform into byproducts of 6PPD. For example, 6PPD-quinone is an oxidized byproduct of 6PPD in tires.

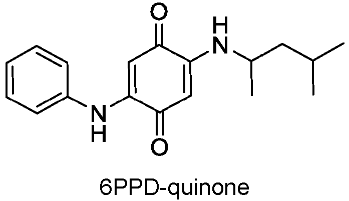

Thus, a replacement compound having comparable or better antioxidant, antiozonant, and migration properties through rubber is desired.

### SUMMARY OF THE INVENTION

The invention relates to an uncured rubber composition in accordance with claim 1, to a vulcanized rubber composition in accordance with claim 12, and to an article in accordance with claim 14.

Dependent claims refer to preferred embodiments of the invention.

In accordance with the present invention, as embodied and described herein, embodiments relate to uncured compositions that include a partially saturated elastomer, wherein less than or equal to 15% of all repeat units of the partially saturated elastomer comprise a double bond, and 2,2,4-trimethyl-1,2-dihydroquinoline (TMDQ) or an oligomer thereof. TMDQ or an oligomer thereof provides antiozonant properties, which eliminates the need for the use of traditional antiozonants such as, for example, 6PPD. The use of TMDQ or an oligomer thereof provides good crack resistance properties. Also disclosed are vulcanized rubber compositions including the uncured compositions after vulcanization and articles including tires and/or components of tires made from or including the vulcanized rubber compositions.

### BRIEF DESCRIPTION OF THE DRAWINGS

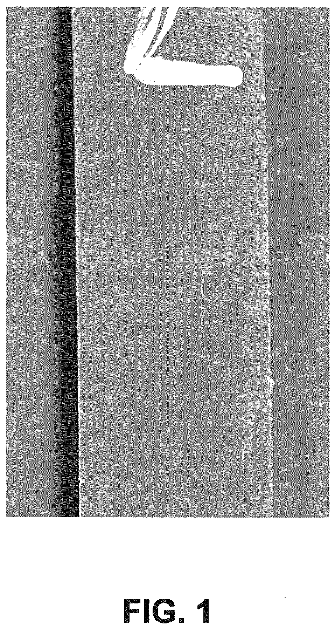

FIG. 1 shows the use of 6PPD and DTPD as an antiozonant in the prior art, which produces a rubber composition that is essentially free of cracks as determined by ozone testing methods, where the rubber composition is composed of a partially saturated elastomer comprising repeat units, wherein greater than 15% of all repeat units of the partially saturated elastomer comprise a double bond.

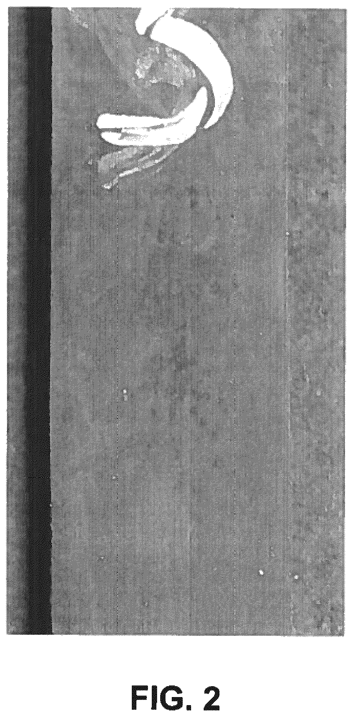

FIG. 2 shows the use of TMDQ as an antiozonant produces a rubber composition that is essentially free of cracks as determined by ozone testing methods, where the rubber composition is composed of a partially saturated elastomer comprising repeat units, wherein less than or equal to 15% of all repeat units of the partially saturated elastomer comprise a double bond.

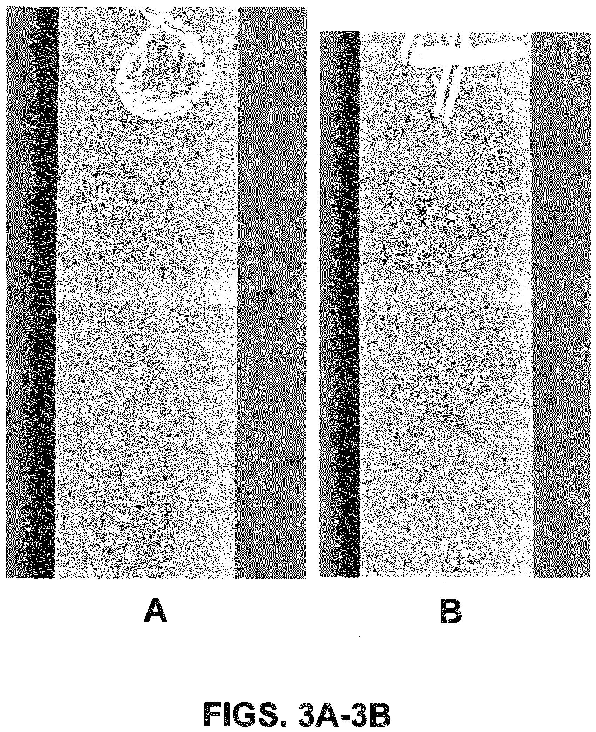

FIGS. 3A and 3B show the use of TMDQ as an antiozonant (3 phr and 5 phr, respectively), which produces a rubber composition that has many small cracks as determined by ozone testing methods, where the rubber composition is composed of a partially saturated elastomer comprising repeat units, wherein greater than 15% of all repeat units of the partially saturated elastomer comprise a double bond.

### DETAILED DESCRIPTION OF PREFERRED EMBODIMENTS OF THE INVENTION

As used herein, "comprising" is to be interpreted as specifying the presence of the stated features, integers, steps, or components as referred to, but does not preclude the presence or addition of one or more features, integers, steps, or components, or groups thereof. Further, the term "comprising" is intended to include examples and embodiments encompassed by the terms "consisting essentially of" and "consisting of." Similarly, the term "consisting essentially of" is intended to include examples encompassed by the term "consisting of.

As used in the specification and the appended claims, the singular forms "a," "an," and "the" include plural referents unless the context clearly dictates otherwise. Thus, for example, reference to "an elastomer" or "a vulcanizing agent," include, but are not limited to, mixtures or combinations of two or more such elastomers or vulcanizing agents, and the like.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers elastomers is in accordance with claimed phr ranges and the amount of all rubbers/elastomers in the composition results in total in 100 parts of rubber.

The terms "rubber" and "elastomer" may be used herein interchangeably, unless indicated otherwise.

As used herein, the "glass transition temperature" or "T_{g}", of an elastomer or rubber represents the glass transition temperature(s) of the respective elastomer or rubber in its uncured state or, in the case of an elastomer composition, in some embodiments, T_{g} can be measured in a cured state. Tg is determined as a peak midpoint by a differential scanning calorimeter (DSC) according to ASTM D3418 or equivalent.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In some embodiments, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In another embodiment, rubber compositions can be cured in molds in order to form finished articles including, but not limited to, tires.

As used herein, the term "repeat unit" as referenced in the partially saturated elastomers described herein are derived from monomers used to produce the partially saturated elastomers.

For example, polybutadiene has the repeat unit as provided below, where the repeat unit can have cis or trans stereochemistry

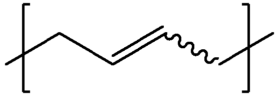

In certain embodiments, when the partially saturated elastomer is the polymerization product of two different monomers (e.g., A and B), the repeat unit can be represented by -A-B-.

2,2,4-trimethyl-1,2-dihydroquinoline, also referred to herein as TMDQ, has the structure below:

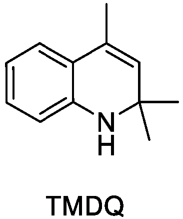

The structure above depicts TMDQ as a monomer; however, oligomers composed of two or more repeat units (e.g., dimers, trimers, etc) of TMDQ can also be used as well. In one embodiment, a mixture of oligomers of TMDQ plus residual monomer of TMDQ can be used as an antiozonant described herein. Examples of TMQDs useful herein include RUBATAN 184 manufactured by General Quimica (Spain), VULKANOX HS/LG manufactured by Lanxess (Germany), and polymerized trimethyl dihydroquinoline manufactured by SHANDONG SUNSINE CHEMICALS (China).

A para-phenylenediamine compound has the general structure: 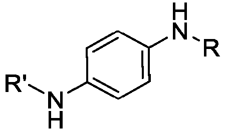 where R and R' are, independently selected, hydrogen, an alkyl group, a cycloalkyl group, or an aryl group. Examples of para-phenylenediamine compounds include N-(1,3-dimethylbutyl)-N'-phenyl-p-phenylenediamine (6PPD):

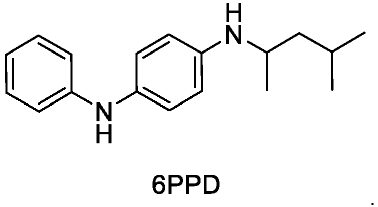

Another example of a para-phenylenediamine antiozonant is DTPD, which is the reaction produce of aniline and ortho-toluidine with hydroquinone. DTPD is a mixture of N,N'-o-tolyl-p-phenylenediamine, N,N'-diphenyl-p-phenylenediamine, and N,N'-di-o-tolyl-p-phenylenediamine.

Unless otherwise specified, pressures referred to herein are based on atmospheric pressure (i.e. one atmosphere).

### Rubber Compositions

It has been discovered that the use of TMDQ or an oligomer thereof in combination with partially saturated elastomers eliminates the need for the use of traditional antiozonants such as para-phenylenediamine compounds like 6PPD and DTPD. Thus, the rubber compositions described herein do preferably not include para-phenylenediamine compounds. In a preferred embodiment, TMDQ or an oligomer thereof is the only antiozonant present in the rubber composition.

It has also been discovered that low amounts of TMDQ or an oligomer thereof when used in the absence of other antiozonants results in the formation of rubber compositions with good physical properties.

In one embodiment, the rubbers compositions described herein include from 2 phr to 8 phr of TMDQ or an oligomer thereof. In one embodiment, the rubbers compositions described herein include 2 phr, 2.5 phr, 3 phr, 3.5 phr, 4 phr, 4.5 phr, 5 phr, 5.5 phr, 6 phr, 6.5 phr, 7 phr, 7.5 phr, or 8 phr of TMDQ or an oligomer thereof, where any value can be a lower and upper endpoint of a range (e.g., 3 phr to 6 phr).

The degree of saturation in the partially saturated elastomer when used in combination with the TMDQ or an oligomer thereof impacts the physical properties of the rubber composition.

In one embodiment, the partially saturated elastomer includes repeat units where less than or equal to 15% of all repeat units include a double bond. In other embodiments, the amount of repeat units that include a double bond can be 1%, 2%, 3%, 4%, 5%, 6%, 7%, 8%, 9%, 10%, 11%, 12%, 13%, 14%, or less than or equal to 15%, where any value can be a lower and upper endpoint of a range (e.g., 5% to 10%).

When counting double bonds, the double bonds in an aromatic structure or group, such as those present in a styrene repeat unit, are not included in the count. However, a styrene unit is still counted as a repeat unit for the determination of the total number of repeat units in an elastomer.

In one embodiment, the partially saturated elastomer can comprise repeat units formed by residues of monomers selected from one or more of ethylene, propylene, butadiene, isoprene, styrene, and any combination thereof. In further embodiments, the partially saturated elastomer is a hydrogenated styrene butadiene rubber, in some embodiments a hydrogenated solution-polymerized styrene butadiene rubber (SSBR). The hydrogenated styrene butadiene rubber can have a styrene content from 5 wt% to 40 wt%, or 5 wt%, 10 wt%, 15 wt%, 20 wt%, 25 wt%, 30 wt%, 35 wt%, or 40 wt%, where any value can be a lower and upper endpoint of a range (e.g., 20 wt% to 40 wt%), and a butadiene content from 60 wt% to 95 wt%, or 60 wt%, 65 wt%, 70 wt%, 75 wt%, 80 wt%, 85 wt%, 90 wt%, or 95 wt%, where any value can be a lower and upper endpoint of a range (e.g., 75 wt% to 90 wt%). In some embodiments, an SSBR can be referred to as a partially hydrogenated SSBR (HSBR) when less than or equal to 15% of all repeat units of the SSBR include a double bond.

In other embodiments, HSBR can be characterized as having 1%, 2%, 3%, 4%, 5%, 6%, 7%, 8%, 9%, 10%, 11%, 12%, 13%, 14%, or less than or equal to 15%, where any value can be a lower and upper endpoint of a range (e.g., 4% to 11%), of all repeat units include a double bond. HSBR can also be characterized by having a weight average molecular weight (M_{w}) from 100 kg/mol to 4,000 kg/mol, or 100 kg/mol, 200 kg/mol, 300 kg/mol, 400 kg/mol, 500 kg/mol, 600 kg/mol, 700 kg/mol, 800 kg/mol, 900 kg/mol, 1,000 kg/mol, 1,100 kg/mol, 1,200 kg/mol, 1,300 kg/mol, 1,400 kg/mol, 1,500 kg/mol, 2,000 kg/mol, 3,000 kg/mol, or 4,000 kg/mol where any value can be a lower and upper endpoint of a range (e.g., 600 kg/mol to 900 kg/mol). In a further embodiment, HSBR can be characterized by having a polydispersity index (M_{w}/Mₙ, Mₙ being the number average molecular weight) of 1.05 to 2.0 or 1.2, 1.4, 1.6, 1.8, or 2.0, where any value can be a lower and upper endpoint of a range (e.g., 1.4 to 1.8).

Molecular weight parameters are determined via gel permeation chromatography according to ASTM 5296-11 using polystyrene calibration standards, or an equivalent.

In other embodiments, HSBR can have a glass transition temperature from -70°C to -20°C, or -70°C, -60°C, -50°C, -40°C, -30°C, or -20°C, where any value can be a lower and upper endpoint of a range (e.g., -60°C to -40°C).

A partially saturated elastomer, in some embodiments HSBR, can be obtained by hydrogenating an elastomer. A method for hydrogenating an elastomer can be performed by any methods known in the art. In one embodiment, hydrogenation is performed by blowing aqueous hydrogen into an elastomer or polymer solution in the presence of a catalyst, such as a heterogeneous catalyst, a homogeneous catalyst, a catalyst using metallocene, such as titanocene, or any combination thereof. Examples of heterogenous catalysts include a catalyst containing a noble metal supported on a porous inorganic substance. Examples of homogenous catalysts include a catalyst obtained by reacting a solubilized salt of nickel, cobalt, or the like with organic aluminum or the like. The extent of hydrogenation in the resulting elastomer can be controlled by varying factors such as the amount of hydrogen added, the pressure of the hydrogen, the reaction time, the reaction temperature, the amount of catalyst added, the polymer solution viscosity, or any combination thereof. In some embodiments, the hydrogenation reaction is carried out at a temperature of from 60°C to 105°C or 60°C, 70°C, 80°C, 90°C, 100°C, or 105°C, where any value can be a lower and upper endpoint of a range (e.g., 70°C to 100°C).

In some embodiments, the hydrogenation reaction is carried out as a batch process, a continuous process, or a combination thereof. Additional details regarding the production of partially saturated elastomers are described in US 2023/0138073 A1 and EP 4 261 234 A1.

In one embodiment, the rubber composition includes 75 phr to 100 phr of the partially saturated elastomer, and 0 phr to 25 phr of one or more of polybutadiene rubber, polyisoprene, hydrogenated styrene butadiene rubber, and natural rubber.

In another embodiment, the partially saturated elastomer comprises a solution-polymerized styrene butadiene rubber having one or more of: i) less than 5% of nonhydrogenated vinyl groups, based on the total number of vinyl groups of a hydrogenated styrene butadiene rubber; ii) less than 20% of nonhydrogenated double bonds in cis-1,4 and trans-1,4 butadiene repeat units, based on the total number of cis-1,4 and trans-1,4 butadiene repeat units; iii) from 80% to 99% of hydrogenated double bonds; and iv) a bound styrene content ranging from 5% to 40% and a butadiene content ranging from 50% to 95%, by weight.

The uncured rubber compositions described herein can include additional components typically employed to make rubber composition. In one embodiment, the rubber compositions can include from 5 phr to 100 phr of silica. Various commercially available silicas may be used, such as, only for example herein, silicas commercially available from PPG Industries under the Hi-Sil trademark with designations 210 and 243; silicas available from Solvay, with, for example, designations of Z1165MP, Z165GR and Zeosil Premium 200MP; and silicas available from Degussa AG with, for example, designations VN2 and VN3. In other embodiment, blends of two or more silicas may also be used, for example, a blend of a relatively high surface area silica combined with a relatively low surface area silica.

In one embodiment, the uncured rubber composition can further include 0.4 phr to 15.0 phr of a vulcanizing agent, or 0.4 phr, 3.0 phr, 6.0 phr, 9.0 phr, 12.0 phr, or 15.0 phr, where any value can be a lower and upper endpoint of a range (e.g., 9.0 phr to 12.0 phr). In some embodiments, the vulcanizing agent includes elemental sulfur, a sulfur-containing silane, or a combination thereof. Additionally, the uncured rubber composition can further include a vulcanizing accelerator. Vulcanizing accelerators can be preferably but not necessarily used to control the time and/or temperature required for vulcanization and to improve the properties of a vulcanized composition. The amount of vulcanizing accelerator in the composition can be in the amount of 0.3 phr to 4.0 phr, or 0.3 phr, 1.0 phr, 2.0 phr, 3.0 phr, or 4.0 phr, where any value can be a lower and upper endpoint of a range (e.g., 1.0 phr to 2.0 phr).

In some embodiments, the vulcanizing accelerator includes a dithiocarbamate accelerator, a thiuram accelerator, a diphenylguanidine accelerator, a benzothiazole sulfenamide accelerator, or a combination thereof. The potential vulcanizing accelerator compounds can include derivatives, e.g., a benzothiazole sulfenamide accelerator includes benzothiazole sulfenamide and can also include derivatives of benzothiazole sulfenamide. In other embodiments, the vulcanizing accelerator includes amines, disulfides, guanidines, thioureas, thiazoles, thiurams, sulfenamides, dithiocarbamates and xanthates. In another embodiment, the vulcanizing accelerator includes combinations of a primary and a secondary accelerator, where the secondary accelerator is used in smaller amounts, such as from 0.05 phr to 3.00 phr. In some embodiments, the secondary accelerator is selected from a guanidine, a dithiocarbamate, or a thiuram. In addition, delayed action accelerators can be used which are not affected by normal processing temperatures but produce a satisfactory cure at ordinary vulcanization temperatures.

In one embodiment, the uncured rubber composition can comprise additional components, such as an oil. In some embodiments, the oil is a processing oil. The processing oil can be included in the composition as an extending oil typically used to extend elastomers. The processing oil can also be included in the elastomer composition by addition of the oil directly during rubber compounding. The processing oil used can include both an extending oil present in the elastomers and a process oil added during compounding. Suitable processing oils include, but are not limited to, various oils as are known in the art, including aromatic, paraffinic, naphthenic, vegetable oils, and low PCA oils, such as MES, TDAE, SRAE, and heavy naphthenic oils. Suitable low PCA oils may include those having a polycyclic aromatic content of less than 3% by weight as determined by the IP346 method. Procedures for the IP346 method can be found in Standard Test Methods for Analysis and Testing of Petroleum and Related Products and British Standard 2000 Parts, 2003, 62nd edition, published by the Institute of Petroleum, United Kingdom. Suitable TDAE oils are available as Tudalen SX500 from Klaus Dahleke KG, VivaTec 400 and VivaTec 500 from H&R Group, Enerthene 1849 from BP, and Extensoil 1996 from Repsol. The oils can be available as the oil alone or along with an elastomer in the form of an extended elastomer. Suitable vegetable oils include, for example, soybean oil, sunflower oil, and canola oil which are in the form of esters containing a certain degree of unsaturation.

In one embodiment, the rubber composition includes from 3 phr to 20 phr of a polyoctenamer.

In another embodiment, the amount of polyoctenamer in the composition can be in the amount of 3 phr, 5 phr, 7 phr, 9 phr, 11 phr, 13 phr, 15 phr, 17 phr, or 20 phr, where any value can be a lower and upper endpoint of a range (e.g., 7 phr to 17 phr).

In one embodiment, the polyoctenamer has one or more of: a glass transition temperature within a range of -50°C to -80°C, as determined under ASTM D3418 as mentioned hereinbelow; a weight average molecular weight M_{w} within a range of 80,000 g/mol to 100,000 g/mol, determined by gel permeation chromatography (GPC) using polystyrene calibration standards according to ASTM 5296-11 or equivalent; and a melting point within a range of 45°C to 55°C, measured by DSC in second heating, according to ASTM D3418 or equivalent.

In another embodiment, the polyoctenamer has between 65% and 85% of trans double bonds of all double bonds in the polyoctenamer.

Described herein are vulcanized rubber compositions, where any of the uncured rubber compositions described herein have been vulcanized. In one aspect, the vulcanized rubber composition has the same or improved reduction in crack propagation when using TMDQ or an oligomer thereof when compared to the same cured composition that includes the same amount of a para-phenylenediamine compound (e.g., 6PPD or DTPD). In one embodiment, the vulcanized rubber composition has from 5% to 20% reduced crack propagation when using TMDQ or an oligomer thereof when compared to the same cured composition that includes the same amount of a para-phenylenediamine compound using the same test method. In another embodiment, the vulcanized rubber composition has 5%, 10%, 15%, or 20% reduced crack propagation when using TMDQ or an oligomer thereof when compared to the same cured composition that includes the same amount of a para-phenylenediamine compound using the same test method, where any value can be a lower and upper endpoint of a range (e.g., 10% to 20%).

ASTM D813 (pierced groove testing or PG Flex) is used to determine crack propagation.

In another embodiment, the vulcanized rubber composition has the same or improved reduced crack propagation when using a partially saturated elastomer having less than or equal to 15% of all repeat units of the partially saturated elastomer having a double bond when compared to the same cured composition that includes a partially saturated elastomer having greater that 15% of all repeat units of the partially saturated elastomer having a double bond when using the same test method. In one embodiment, the vulcanized rubber composition has from 50% to 90% improved reduced crack propagation when using a partially saturated elastomer having less than or equal to 15% of all repeat units of the partially saturated elastomer having a double bond when compared to the same cured composition that includes a partially saturated elastomer having greater than 15% of all repeat units of the partially saturated elastomer having a double bond when using the same test method. In another embodiment, the vulcanized rubber composition has 50%, 60%, 70%, 80%, or 90% improved reduced crack propagation when using a partially saturated elastomer having less than or equal to 15% of all repeat units of the partially saturated elastomer having a double bond when compared to the same cured composition that includes a partially saturated elastomer having greater than 15% of all repeat units of the partially saturated elastomer having a double bond when using the same test method.

In addition to providing a reduction in crack propagation, the use of TMDQ also reduces or prevents crack formation. As demonstrated in the Examples, rubber compositions prepared with TMDQ and a partially saturated elastomer having less than or equal to 15% of all repeat units of the partially saturated elastomer having a double bond are essentially crack-free. Similarly, the same rubber composition produced with 6PPD and DTPD as the antiozonant is essentially crack-free as well. Rubber compositions produced with TMDQ have comparable ozone resistance when compared to the use of traditional antiozonants such as 6PPD and DTPD.

Ozone testing methods such as DIN 53509 and DIN ISO 4131-1 are used to evaluate crack formation.

### Preparation and Applications of Rubber Compositions

The compositions disclosed herein can be compounded by methods generally known in the rubber compounding art, such as mixing the partially saturated elastomer and TMDQ or an oligomer thereof with various vulcanizable constituent rubbers with various commonly used additive materials such as sulfur donors; curing aids, such as activators and retarders; processing additives, such as oils, resins (including tackifying resins), and plasticizers; fillers; pigments; fatty acids; zinc oxide; waxes; antioxidants; antiozonants; and peptizing agents. Zinc oxide can be included in amounts of 1 phr to 5 phr. Depending on the intended use of the vulcanizable and vulcanized material (rubbers), the additives mentioned above are selected and commonly used in conventional amounts. In some embodiments, tackifier resins are included in amounts of 0.5 phr to 10 phr or 1 phr to 5 phr. In some embodiments, processing additives are included in amounts of 1 phr to 50 phr. In some embodiments, antioxidants are included in amounts of 1 phr to 5 phr. Representative antioxidants include, but are not limited to, diphenyl-p-phenylenediamine and others, such as those disclosed in The Vanderbilt Rubber Handbook, edited by Robert O. Babbit (Norwalk, Connecticut, R. T. Vanderbilt Company, Inc., 1978), Pages 344 through 346. In some embodiments, antiozonants are included in amounts of 1 phr to 5 phr. Representative antiozonants include, but are not limited to, N-phenyl-N'-(1,3-dimethylbutyl)-p-phenylenediamine (6PPD) and N,N'-o-tolyl-p-phenylenediamine (DTPD). In some embodiments, fatty acids are included in amounts of 0.5 phr to 3 phr. Examples of fatty acids used includes stearic acid. In some embodiments, waxes are included in amounts of 1 phr to 5 phr. Microcrystalline waxes can be used. In some embodiments, peptizers are included in amounts of 0.1 phr to 1 phr. Typical peptizers include, for example, pentachlorothiophenol and dibenzamidodiphenyl disulfide.

The compositions disclosed herein can be mixed by methods known in the rubber mixing art. For example, the ingredients may be typically mixed in at least two stages, namely, at least one nonproductive stage followed by a productive mix stage. In some embodiments, the mixing of the uncured composition comprises only a single nonproductive stage. The final curatives including vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the elastomer composition may be subjected to a thermomechanical mixing step. The thermomechanical mixing step generally comprises a mechanical working in a mixer or extruder for a period of time, for example suitable to produce a rubber temperature which is within the range of 140 °C to 190 °C. The appropriate duration of the thermomechanical working varies as a function of the operating conditions, and the volume and nature of the components. For example, the thermomechanical working may be from 1 to 20 minutes.

The invention also provides for articles that incorporate any of the vulcanized rubber compositions disclosed herein. In some embodiments, the article comprises a tire, such as a pneumatic tire, or a component of a tire. The tire can be a race tire, passenger tire, aircraft tire, agricultural, earthmover, off-the-road or truck tire. In one embodiment, the tire is a passenger or truck tire. The tire can also be a radial or bias. The component of the tire can be a tread, base, apex, chafer, wirecoat, innerliner, or any combination thereof. In another embodiment, the component of the tire including the composition is a tread, base, sidewall, or any combination thereof. Vulcanization of the disclosed tires is generally carried out at conventional temperatures ranging from 100°C to 200°C or from 110°C to 180°C. Such tires can be built, shaped, molded and cured by various methods which are known and will be readily apparent to those having skill in such art.

Now having described the embodiments of the present disclosure, in general, the following examples describe some additional embodiments of the present disclosure.

### EMBODIMENTS

The present disclosure can be described in accordance with the following numbered Embodiments, which should not be confused with the claims.

Embodiment 1. An uncured composition comprising: at least one partially saturated elastomer comprising repeat units, wherein less than or equal to 15% of all repeat units of the partially saturated elastomer comprise a double bond, and 2,2,4-trimethyl-1,2-dihydroquinoline or an oligomer thereof.

Embodiment 2. The composition of Embodiment 1, wherein the composition comprises from 2 phr to 8 phr of 2,2,4-trimethyl-1,2-dihydroquinoline or an oligomer thereof.

Embodiment 3. The composition of Embodiment 1 or 2, wherein the composition does not include a para-phenylenediamine compound.

Embodiment 4. The composition of Embodiment 1 or 2, wherein the para-phenylenediamine compound is 6PPD, DTPD, or any combination thereof.

Embodiment 5. The composition of any one of Embodiments 1-4, wherein the partially saturated elastomer comprises repeat units formed by residues of monomers selected from one or more of ethylene, propylene, butadiene, isoprene, styrene, and any combination thereof.

Embodiment 6. The composition of any one of Embodiments 1-4, wherein the partially saturated elastomer is a partially hydrogenated styrene butadiene rubber.

Embodiment 7. The composition of any one of Embodiments 1-6, wherein the partially saturated elastomer has a glass transition temperature of -20°C to -65°C.

Embodiment 8. The composition of any one of Embodiments 1-7, wherein the partially saturated elastomer has a weight average molecular weight of 200,000 g/mol to 500,000 g/mol.

Embodiment 9. The composition of any one of Embodiments 1-8, wherein from 4% to 11% of all repeat units have a double bond.

Embodiment 10. The composition of any one of Embodiments 1-9, comprising 75 phr to 100 phr of the partially saturated elastomer, and 0 phr to 25 phr of one or more of polybutadiene rubber, polyisoprene, hydrogenated styrene butadiene rubber, and natural rubber.

Embodiment 11. The composition of any one of Embodiments 1-10, wherein the partially saturated elastomer comprises a solution-polymerized styrene butadiene rubber having one or more of: i) less than 5% of nonhydrogenated vinyl groups, based on the total number of vinyl groups of the hydrogenated styrene butadiene rubber; ii) less than 20% of nonhydrogenated double bonds in cis-1,4 and trans-1,4 butadiene repeat units, based on the total number of cis-1,4 and trans-1,4 butadiene repeat units; iii) from 80% to 99% of hydrogenated double bonds; and iv) a bound styrene content ranging from 5% to 40% and a butadiene content ranging from 50% to 95%, by weight.

Embodiment 12. The composition of any one of Embodiments 1-11, wherein the composition further comprises an amount of from 10 phr to 100 phr of silica.

Embodiment 13. The composition of any one of Embodiments 1-12, further comprising from 3 phr to 20 phr of a polyoctenamer.

Embodiment 14. The composition of any one of Embodiments 1-13, wherein the composition further comprises a vulcanizing agent in the amount of 0.4 phr to 15.0 phr.

Embodiment 15. The composition of any one of Embodiments 1-14, wherein the composition further comprises a vulcanizing accelerator in the amount of 0.3 phr to 4.0 phr.

Embodiment 16. A vulcanized rubber composition comprising the uncured composition of any one of Embodiments 1-15 that has been vulcanized.

Embodiment 17. The composition of Aspect 16, wherein the composition has a PG Flex crack length of 3.0 mm to 3.5 mm at 180 minutes as determined by ASTM D813.

Embodiment 18. The composition of Embodiment 16, wherein the composition has a PG Flex crack length of 4.0 mm to 5.5 mm at 240 minutes as determined by ASTM D813.

Embodiment 19. An article comprising the vulcanized rubber composition of any one of Embodiments 16-18.

Embodiment 20. The article of Embodiment 19, wherein the article comprises a tire or a component of a tire.

Embodiment 21. The article of Embodiment 20, wherein the component of the tire comprises a tread, base, apex, chafer, wirecoat, innerliner, or any combination thereof.

### EXAMPLES

The following examples are put forth so as to provide those of ordinary skill in the art with a complete disclosure and description of how the compounds, compositions, articles, devices and/or methods claimed herein are made and evaluated. Unless indicated otherwise, parts are parts by weight, temperature is in °C or is at ambient temperature, and pressure is at or near atmospheric.

### Example 1: Comparison with Different Antiozonants

Four elastomer compositions comprising a solution polymerized styrene butadiene rubber (SSBR)-based matrix are provided in Table 1. An important difference is that SSBR 2 contains TMDQ as the antiozonant whereas SSBR 1 contains 6PPD and DTPD as the antiozonant.

In the case of SSBR 3 and SSBR 4, these compositions include a partially saturated elastomer having greater than 15% of all repeat units of the partially saturated elastomer having a double bond, while SSBR 2 includes partially saturated elastomer having less than 15% of all repeat units of the partially saturated elastomer having a double bond.

**Table 1**

| | **Amounts in phr** | | | |
|---|---|---|---|---|
| **Ingredient** | **SSBR 1** | **SSBR 2** | **SSBR 3** | **SSBR 4** |
| Partially Saturated Elastomer 1¹ | 100 | 100 | 0 | 0 |
| Partially Saturated Elastomer 2² | 0 | 0 | 100 | 100 |
| Polyoctenamer³ | 5 | 5 | 0 | 0 |
| Waxes | 1.5 | 1.5 | 1.5 | 1.5 |
| TDAE Oil | 15 | 15 | 15 | 15 |
| Stearic Acid | 3 | 3 | 3 | 3 |
| Silica⁴ | 80 | 80 | 80 | 80 |
| Antiozonant | 2.5 (6PPD)⁵ | 3 (TMDQ)⁷ | 3 (TMDQ)⁷ | 5 (TMDQ)⁷ |
| | 0.5 (DTPD)⁶ | | | |
| Silane 1⁸ | 8 | 8 | 8 | 0 |
| Zinc Oxide | 2.5 | 2.5 | 2.5 | 2.5 |
| Sulfur | 1.1 | 1.1 | 1.1 | 1.1 |
| Processing Aids⁹ | 1 | 1 | 1 | 1 |
| DPG¹⁰ | 2.9 | 2.9 | 2.9 | 2.9 |
| CBS¹¹ | 2.9 | 2.9 | 2.4 | 2.4 |
| MBT¹² | 0.2 | 0.2 | 0.2 | 0.2 |

| | | | | |
|---|---|---|---|---|
| ¹ Hydrogenated solution-polymerized styrene-butadiene rubber having a Tg of -30°C, as NT120 from Eneos ² Hydrogenated solution-polymerized styrene-butadiene rubber having a Tg of -63°C ³ as Vestenamer^{™} 8012 from Evonik ⁴ Precipitated silica as Zeosil^{™} Premium 200MP from Solvay ⁵ as Santoflex^{™} 6PPD from Flexsys ⁶ as PolystayTM 100 from Goodyear Chemical ⁷ as VulkanoxTM HS/LG from Lanxess ⁸ Bis-triethoxysilylpropyl disulfide as SI266^{™} from Evonik ⁹ including glycerine monoesters of stearic acid and zinc soaps of fatty acids ¹⁰ Diphenylguanidine (accelerator) ¹¹ N-cyclohexyl-2-benzothiazolesulfenamide (accelerator) ¹² 2-Mercaptobenzothiazole (accelerator) | | | | |

Table 2 provides crack resistance results for each rubber composition.

As provided in Table 2, the use of TMDQ in SSBR 2 provides roughly the same or improved reduction in crack propagation when compared to the use of 6PPD and DTPD in SSBR 1. Furthermore, SSBR 2 provides significantly improved reduction in crack propagation when compared to SSBR 3 and SSBR 4. Indeed, SSBR 3 and SSBR 4 are fully cracked at 240 minutes under the PG flex test (ASTM D813).

In addition to providing a reduction in crack propagation, the use of TMDQ also reduces or prevents crack formation. The rubber composition SSBR 2 prepared with TMDQ and partially saturated elastomer comprising repeat units, wherein less than or equal to 15% of all repeat units of the partially saturated elastomer comprise a double bond (i.e., an inventive composition) is essentially crack-free (FIG. 2). Similarly, the same rubber composition produced with 6PPD and DTPD as the antiozonant (SSBR 1; comparative example) are essentially crack-free as well (FIG. 1) as determined by DIN 53509 and DIN ISO 4131-1.

These results demonstrate that rubber compositions produced with TMDQ have comparable ozone resistance when compared to the use of traditional antiozonants such as 6PPD and DTPD.

In another experiment, rubber compositions SSBR 3 and SSBR 4 were prepared with TMDQ in an amount of 3 phr and 5 phr, respectively, and a partially saturated elastomer comprising repeat units, wherein greater than 15% of all repeat units of the partially saturated elastomer comprise a double bond. SSBR 3 and SSBR 4 are comparative examples. SSBR 3 and SSBR 4 possessed many small cracks (FIGS. 3A and 3B respectively) as determined by DIN 53509 and DIN ISO 4131-1.

Finally, substituting traditional antiozonants such as 6PPD and DTPD with TMDQ does not alter the physical properties (dynamic and static properties) of both the non-aged and aged (4 days at 90°C in air) rubber compositions.

**Table 2**

| **PG Flex** | **SSBR 1** | **SSBR 2** | **SSBR 3** | **SSBR 4** |
|---|---|---|---|---|
| Crack length at 180 min | 3.33 | 3.30 | 14.70 | 11.80 |
| Crack length at 240 min | 4.60 | 4.17 | Fully cracked | Fully cracked |

## Claims

1. An uncured composition comprising at least one partially saturated elastomer comprising repeat units, wherein less than or equal to 15% of all repeat units of the partially saturated elastomer comprise a double bond, and 2,2,4-trimethyl-1,2-dihydroquinoline or an oligomer thereof.

2. The composition of claim 1, wherein the composition comprises from 2 phr to 8 phr, alternatively from 2 phr to 5 phr, of 2,2,4-trimethyl-1,2-dihydroquinoline or an oligomer thereof.

3. The composition of claim 1 or 2, wherein the composition excludes a para-phenylenediamine compound or wherein the composition excludes 6PPD, DTPD, or any combination thereof.

4. The composition of at least one of the previous claims, wherein the partially saturated elastomer comprises repeat units formed by residues of monomers selected from one or more of ethylene, propylene, butadiene, isoprene, styrene, and any combination thereof.

5. The composition of at least one of the previous claims, wherein the partially saturated elastomer is a partially hydrogenated styrene butadiene rubber.

6. The composition of at least one of the previous claims, wherein the partially saturated elastomer has a glass transition temperature of from -20°C to -65°C and/or has a weight average molecular weight of from 200,000 g/mol to 500,000 g/mol.

7. The composition of at least one of the previous claims, wherein from 4% to 11% of all repeat units have a double bond.

8. The composition of at least one of the previous claims, comprising 75 phr to 100 phr of the partially saturated elastomer, and 0 phr to 25 phr, alternatively from 5 phr to 25 phr, of one or more of polybutadiene rubber, polyisoprene, hydrogenated styrene butadiene rubber, and natural rubber.

9. The composition of at least one of the previous claims, wherein the partially saturated elastomer comprises a solution-polymerized styrene butadiene rubber having one or more or all of:
i) less than 5% of nonhydrogenated vinyl groups, based on the total number of vinyl groups of the hydrogenated styrene butadiene rubber;
ii) less than 20% of nonhydrogenated double bonds in cis-1,4 and trans-1,4 butadiene repeat units, based on the total number of cis-1,4 and trans-1,4 butadiene repeat units;
iii) from 80% to 99% of hydrogenated double bonds; and
iv) a bound styrene content ranging from 5% to 40% and a butadiene content ranging from 50% to 95%, by weight.

10. The composition of at least one of the previous claims, wherein the composition further comprises from 10 phr to 100 phr of silica and/or further comprises from 3 phr to 20 phr of a polyoctenamer.

11. The composition of at least one of the previous claims, wherein the composition further comprises a vulcanizing agent in the amount of 0.4 phr to 15.0 phr and/or wherein the composition further comprises a vulcanizing accelerator in the amount of 0.3 phr to 4.0 phr.

12. A vulcanized rubber composition comprising the uncured composition of at least one of the previous claims that has been vulcanized.

13. The vulcanized rubber composition of claim 12, wherein the composition has a PG Flex crack length of 3.0 mm to 3.5 mm at 180 minutes as determined by ASTM D813 or a PG Flex crack length of 4.0 mm to 5.5 mm at 240 minutes as determined by ASTM D813.

14. An article comprising the vulcanized rubber composition of claim 12 or 13.

15. The article of claim 14, wherein the article comprises a tire or a component of a tire such as a tread, a base, an apex, a chafer, a wirecoat, an innerliner, or any combination thereof.
